# EUROPÄISCHE PATENTSCHRIFT

(11) **EP 3 420 426 B1**
(45) Veröffentlichungstag und Bekanntmachung des Hinweises auf die Patenterteilung: **20.11.2019**
(21) Anmeldenummer: 17717150.1
(22) Anmeldetag: 12.04.2017
(51) Int. Cl.: G05B 19/408, G05B 23/02

(54) **VORRICHTUNG UND VERFAHREN ZUR ANPASSUNG EINER NUMERISCHEN STEUERUNG AN EINE ZU STEUERNDE MASCHINE**
DEVICE AND METHOD FOR ADAPTING A NUMERICAL CONTROL SYSTEM TO A MACHINE TO BE CONTROLLED
DISPOSITIF ET PROCEDE D'ADAPTATION D'UNE COMMANDE NUMERIQUE SUR UNE MACHINE A COMMANDER

(30) Priorität: 19.04.2016 EP 16166018
(43) Veröffentlichungstag der Anmeldung: 02.01.2019
(73) Patentinhaber: Siemens Aktiengesellschaft, 80333 München (DE)
(72) Erfinder: MAY, Benjamin, 71272 Renningen (DE); POLZ, Andreas, 91056 Erlangen (DE); RUDOLF, Henning, 90427 Nürnberg (DE); SPERLICH, Reiner, 89081 Ulm (DE)
(86) Internationale Anmeldenummer: PCT/EP2017/058725
(87) Internationale Veröffentlichungsnummer: WO 2017/182345

(56) Entgegenhaltungen:
- WO-A1-2005/047997
- WO-A1-2012/074823
- US-A1- 2014 201 571

## Beschreibung

Die vorliegende Erfindung betrifft eine Vorrichtung zur datenmäßigen Anpassung einer numerischen Steuerung an eine Maschine, umfassend eine Datenerfassungslogik, die über eine Datenverbindung mit der Maschine verbunden ist, zur Erfassung von Werten von Maschinenparametern, die für einen Maschinenzustand charakteristisch sind, wobei die Datenerfassungslogik ein Schnittstellenmodul umfasst.

Die vorliegende Erfindung betrifft weiterhin ein Verfahren zur datenmäßigen Anpassung einer numerischen Steuerung an eine Maschine, wobei die numerische Steuerung eine Datenerfassungslogik umfasst, die zur Erfassung von Werten von Maschinenparametern, die für einen Maschinenzustand charakteristisch sind, über eine Datenverbindung mit der Maschine verbunden ist.

Die vorliegende Erfindung betrifft weiterhin eine numerische Steuerung mit einer Vorrichtung zur datenmäßigen Anpassung der numerischen Steuerung an eine Maschine.

Als numerische Steuerung (NC, englisch Numerical Control) bezeichnet man ein Gerät zur Steuerung einer Maschine, das Steuerbefehle von einem Datenträger liest und in Arbeits- und/oder Bewegungsabläufe der Maschine umsetzt. Heute ist eine numerische Steuerung meist mit einem Rechner ausgestattet, der die in Form eines Computerprogramms vorliegenden Steuerbefehle für die entsprechenden Arbeits- bzw. Bewegungsabläufe der Maschine aufbereitet. Für die Steuerprogramme, mit denen eine Folge von verschiedenen Bewegungsabläufen der Maschine vorgegeben werden kann, gibt es normierte Programmiersprachen, bei denen der Satz- und Adressaufbau der zu übermittelnden numerischen Steuerungsinformationen festgelegt ist. Somit kann ein Programm, das entsprechend der Norm erstellt wurde, auf verschiedenen numerischen Steuerungen abgearbeitet werden. Die Anpassung der allgemein vorgegebenen Steuerbefehle des Steuerprogramms an die konkrete Maschine erfolgt über eine spezielle Datenlogik.

Man kann für eine numerische Steuerung drei wesentliche Funktionsgruppen unterteilen: den COM-Teil, den NC-Kern und die Anpasssteuerung.

Der COM-Teil dient Kommunikationsaufgaben mit der angeschlossenen Peripherie, wie beispielsweise Eingangs- und Ausgangsbaugruppen, Sensoren, Endschaltern und ähnlichem. Weiterhin erfüllt der COM-Teil die Kommunikationsaufgaben mit einem Bediener in einer Mensch-Maschine-Schnittstelle und für einen Programmierer in einer Programmierumgebung, welche mindestens einen Programmeditor, oft aber auch Simulations- und Testeinrichtungen umfasst.

Der NC-Kern beinhaltet die Hauptfunktionalität einer numerischen Steuerung, also beispielsweise für eine Werkzeugmaschine die Wegesteuerung und Interpolation und damit die Erzeugung von Bewegungssollwerten. Das Nachführen dieser Bewegungen erfolgt im Allgemeinen durch eine Lageregelung.

Zur Anpassung der numerischen Steuerung an konkrete Maschinentypen dient die Anpasssteuerung. Hier sind maschinenbezogene Verbindungen auf der Grundlage boolescher Variablen und Grundfunktionen realisiert. Die Anpasssteuerung ist mit Aktoren und Sensoren in der Maschine verbunden. Über die Anpasssteuerung werden Aktoren in der Maschine angesteuert und Signale oder Zustände von Sensoren in der Maschine erfasst und ggf. auch verarbeitet. In heutigen numerischen Steuerungen ist die Anpassungssteuerung oft mit einer PLC (programmable logic controller realisiert, die nach Art einer speicherprogrammierbaren Steuerung arbeitet.

Der Aufbau und die Funktion von numerisch gesteuerten Maschinen sind ebenso vielfältig, wie es verschiedene Fertigungstechnologien gibt. So werden in der modernen Fertigung beispielsweise numerisch gesteuerte Bohrmaschinen, Fräsmaschinen, Drehmaschinen und Schleifmaschinen eingesetzt. Weiter sind aus der modernen Fertigung Sondermaschinen nach Werkstückklasse, wie beispielsweise Verzahnungsfräsmaschinen, Kurbelwellenbearbeitungsmaschinen und Werkzeugschleifmaschinen, nicht mehr wegzudenken. Alle diese Maschinenarten erfordern eine individuelle Anpassung an die numerische Steuerung. Die numerische Steuerung wird über eine entsprechende Anpasssteuerung an die numerisch steuerbare Maschine adaptiert. Die Unterschiede in Aufbau und in Funktion der verschiedenen Maschinen spiegeln sich auch in der Kommunikation zwischen der numerischen Steuerung und der Maschine wider. Die Kommunikation erfolgt über binäre Ein- und Ausgänge der zu steuernden Maschine mit der Datenerfassungslogik der numerischen Steuerung. Aufgrund der unterschiedlichen Arbeitsabläufe in den verschiedenen Maschinenarten und Maschinentypen ist im Allgemeinen die Datenstruktur für die Kommunikation entsprechend verschieden. Es gibt aber auch generelle Maschinenzustände, die bei vielen Maschinenarten und Maschinentypen gleich sind. Dazu gehören beispielsweise Zustände wie "Maschine produziert", "Fehler", "Wartung aktiv" usw. Diese Maschinenzustände werden im Betrieb der Maschine erfasst, und bewirken bei ihrem Auftreten bzw. Nichtauftreten vom Steuerprogramm entsprechend vorgesehene Aktionen und/oder Meldungen. Es gibt demnach Informationsinhalte zwischen der numerischen Steuerung und der gesteuerten Maschine, die bei vielen Maschinen trotz einer unterschiedlichen Datenstruktur eine ähnliche Bedeutung oder eine ähnliche Semantik haben.

Aus der WO 2012/074823 A1 ist ein Verfahren zum Erkennen von Anomalien in einer Maschine bekannt. Hierzu werden in einer Steuerung der Maschine vorliegende Daten ausgewertet. Ebenso werden Daten von an der Maschine angebrachten Sensoren ausgewertet. Für bestimmte Maschinenzustände werden bestimmte Wertebereiche für die Sensordaten festgelegt und es wird überprüft, ob sich die ermittelten Sensordaten in dem jeweiligen Maschinenzustand innerhalb des festgelegten Wertebereiches befinden.

Aus der US 2014/0201571 A1 ist ein System zur Zustandsüberwachung und Fehlerdiagnose bekannt, bei dem für eine Maschine, beispielsweise einen Roboter, Daten aufgezeichnet werden. Die Daten werden analysiert und aus dem Analyseergebnis werden Rückschlüsse auf den Zustand einzelner Komponenten der Maschine gezogen.

In der DE 39 39 629 A1 ist eine numerische Steuerung für Werkzeugmaschinen oder Roboter offenbart, bei der Steuersignale und Meldesignale über eine Anpassschnittstelle und eine Vielzahl von Signalleitungen zwischen der Steuerung und dem zu steuernden Gerät austauschbar sind. Der Anpassschnittstelle ist ein programmierbarer Umsetzer zugeordnet, der für jede Signalfunktion und Art des Zugriffs die zugehörige jeweilige Signalleitung festlegt. Diese Zuordnung ist während der Installationsphase frei einstellbar. Dazu sind Signalfunktion und Art eines Zugriffs in Form von Namenslisten vorgegeben. Diesen symbolischen Namen ist jeweils eine laufende Nummer als Platznummer der Zuordnung zugeordnet. Der Steuerungsseite des Umsetzers werden die laufenden Nummern für die symbolischen Namen der Signale eingeprägt und entsprechend einer Rangierliste dem Umsetzer mitgeteilt. Dort wird die Zuordnung der laufenden Nummern zu den räumlichen Gegebenheiten der Leitungsführung getroffen.

Der vorliegenden Erfindung liegt die Aufgabe zugrunde, eine Vorrichtung anzugeben, mittels derer eine numerische Steuerung einfach an eine konkrete Maschine anpassbar ist.

Der Erfindung liegt ebenfalls die Aufgabe zugrunde, eine numerische Steuerung anzugeben, die auf einfache Weise an eine konkrete Maschine anpassbar ist.

Der Erfindung liegt zudem die Aufgabe zugrunde, ein Verfahren anzugeben, mittels dessen eine numerische Steuerung auf einfache Weise an eine konkrete Maschine anpassbar ist.

Die erstgenannte Aufgabe wird durch eine Vorrichtung mit den Merkmalen des Anspruchs 1 gelöst. Danach enthält das Schnittstellenmodul der eingangs angegebenen Vorrichtung Regeln, mittels derer eine Maschinendatenstruktur der Werte von Maschinenparametern in eine von der numerischen Steuerung lesbare Steuerungsdatenstruktur transformiert wird. Des Weiteren umfasst das Schnittstellenmodul einen Interpreter mit Plugin-Mechanismen für die Regeln zur Interpretation und Aufbereitung der Daten von Maschinenparametern.

Damit ist es möglich, verschiedene Maschinendatenstrukturen flexibel in eine allgemein gültige Steuerungsdatenstruktur zu transformieren. Die Flexibilität wird softwaremäßig über Regeln realisiert.

Die Steuerungsdatenstruktur der Parameter, die einen Maschinenzustand beschreiben, kann einem Standarddatenformat folgen oder sogar einer normierten Datenstruktur. Beispielsweise gibt es für verschiedene Maschinen allgemein gültige Maschinenzustände, die so mittels der Regeln transformiert werden und an die Steuerung weitergegeben werden.

Die Realisierung dieser Funktionalität mit einem Interpreter hat den Vorteil, dass jeweils ein aktuell auftretendes Maschinendatum unmittelbar vom Interpreter mit seinem Regelwerk verarbeitet wird. Falls es eine Regel für dieses Maschinendatum gibt, erfolgt ohne Veränderung der Semantik eine Transformation der Maschinendatenstruktur in die Steuerungsdatenstruktur. Mit der Verwendung eines Interpreters im Schnittstellenmodul kann sichergestellt werden, dass die Logik der Regeln vom Steuerungscode entkoppelt ist und dass der Maschinencode nicht geändert wird. In Abhängigkeit der Werte der Maschinenparameter bestimmt der Interpreter mittels der Regeln den Maschinenzustand. Dabei wird jeweils ein auftretendes Maschinendatum mit dem Regelwerk vom Interpreter verglichen. Falls es eine passende Regel gibt, erfolgt entsprechend der Regel ohne Veränderung der Semantik eine Transformation die Steuerungsdatenstruktur. Verschiedene Maschinenarten und Maschinentypen lassen sich über entsprechende Plugins, die die maschinenspezifischen Regeln zur Transformation der Datenstrukturen vorgeben, einfach an die numerische Steuerung anpassen.

Vorteilhafte Ausgestaltungen der Vorrichtung sind durch die Merkmale der Ansprüche 2 und 3 gegeben.

Eine besonders vorteilhafte Ausgestaltung ergibt sich durch die Merkmale des Anspruchs 3. Danach ist die zu steuernde Maschine als Werkzeugmaschine ausgebildet. Die Werkzeugmaschine umfasst binäre Ein-/Ausgänge zur Herstellung und auch Meldung eines bestimmten Maschinenzustands. Über die Eingänge werden den Aktoren in der Werkzeugmaschine Steuersignale für ihren Betrieb zugeführt. Über die Ausgänge werden Signale von Sensoren in der Werkzeugmaschine an die numerische Steuerung gegeben. Verschiedene Werkzeugmaschinen können so unabhängig von der darin implementierten Fertigungstechnologie einfach an eine universelle numerische Steuerung angepasst werden.

Die zweitgenannte Aufgabe wird durch eine numerische Steuerung mit den Merkmalen des Anspruchs 4 gelöst. Danach umfasst die numerische Steuerung eine Vorrichtung nach einem der Ansprüche 1 bis 3. Die numerische Steuerung umfasst zudem eine Anpasssteuerung und die Datenerfassungslogik ist als Teil der Anpasssteuerung der numerischen Steuerung ausgebildet.

Die drittgenannte Aufgabe wird durch ein Verfahren mit den Merkmalen des Anspruchs 5 gelöst. Danach umfasst das Verfahren zur datenmäßigen Anpassung der eingangs genannten numerischen Steuerung an die eingangs genannte Maschine die Schritte:
- Versetzen der zu steuernden Maschine in einen jeweiligen Maschinenzustand,
- Übertragen der bei dem jeweiligen Maschinenzustand auftretenden Werte der Maschinenparameter an die Datenerfassungslogik,
- Speichern der bei dem jeweiligen Maschinenzustand auftretenden Werte der Maschinenparameter in der Datenerfassungslogik und
- Zuweisen des jeweiligen Maschinenzustands zu den jeweils gespeicherten Werten der Maschinenparameter als mindestens eine Regel zur Interpretation der Werte der Maschinenparameter.

Das Verfahren erlaubt es, Regeln zur Transformation der Datenstrukturen durch Aufzeichnung und Beschreibung der Ist-Daten automatisch von der numerischen Steuerung erlernen zu lassen. Ein Maschinenbediener muss sich nicht damit befassen, welche Werte der Maschinenparameter für einen bestimmten Maschinenzustand charakteristisch sind. Der Maschinenbediener versetzt die Maschine nacheinander in die relevanten Zustände und speichert jeweils die Kombination der dabei auftretenden Werte der Maschinenparameter ab. Die Semantik oder der Bedeutungsinhalt ist durch die vorgegebenen Maschinenzustände definiert. Die erlernten Regeln können nun im täglichen Betrieb automatisch angewendet werden, um die entsprechenden Zustände zu erkennen.

Vorteilhafte Ausgestaltungen des erfindungsgemäßen Verfahrens sind durch die Merkmale der Ansprüche 6 und 7 gekennzeichnet.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: in einem Blockbild den Aufbau einer numerische Steuerung mit einer damit gesteuerten Werkzeugmaschine und
- FIG 2: die wesentlichen Verfahrensschritte eines Verfahrens zur Erzeugung von Regeln zur Transformation von Werkzeugmaschinendaten in Steuerungsdaten.

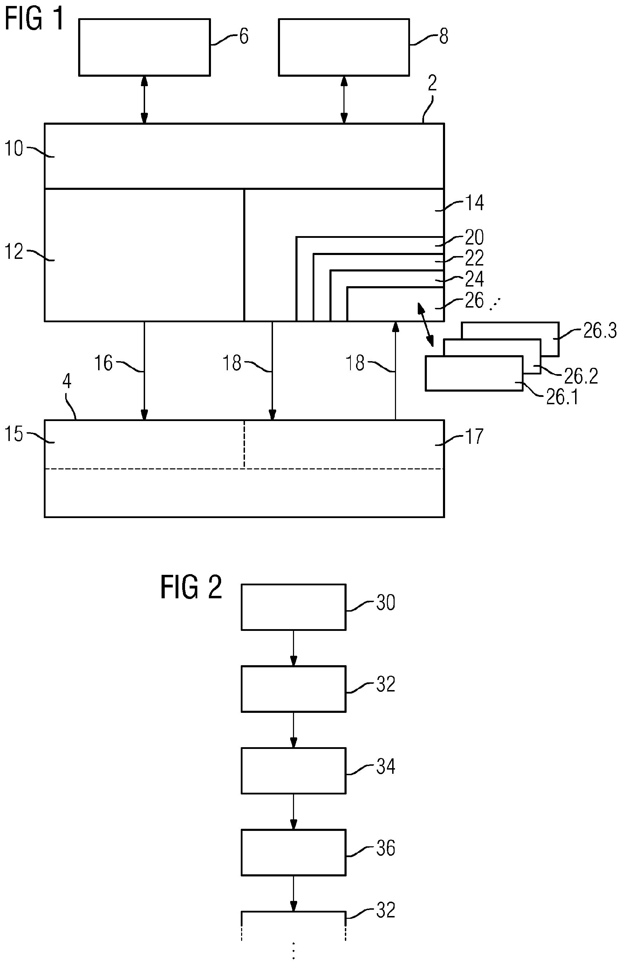

Das Blockbild in FIG 1 zeigt eine numerische Werkzeugmaschinensteuerung 2, die mit einer Werkzeugmaschine 4 zur Bearbeitung eines Werkstücks zusammenwirkt. Der Zugang eines Anwenders oder Bedieners zu der Werkzeugmaschinensteuerung 2 erfolgt über eine Ein-/Ausgabeeinheit 6, die auch als NC-Bedientafel bezeichnet wird. Zusätzlich ist noch eine Kommunikationsschnittstelle 8 vorgesehen, die eine Einbettung der numerisch gesteuerten Werkzeugmaschine 4 in ein Computernetzwerk ermöglicht, diese Funktion wird im Englischen als Distributed Numerical Control (DNC) bezeichnet.

Die Werkzeugmaschinensteuerung 2 ist unterteilt in drei Hauptbereiche. Ein erster Hauptbereich, der COM-Teil 10, erfüllt Kommunikationsaufgaben mit einer angeschlossenen Peripherie, wie zum Beispiel Eingangs- und Ausgangsbaugruppen, Sensoren, Endschaltern und ähnlichem. Des Weiteren dient der COM-Teil 10 der Kommunikation mit der Ein-/Ausgabeeinheit 6. Er stellt zudem eine Programmierungsumgebung zur Verfügung, welche mindestens einen Programmeditor, oft aber auch Simulations- und Testeinrichtungen umfasst.

Die Hauptfunktionalität der Werkzeugmaschinensteuerungen 2, also eine Wegesteuerung und Interpolation und damit die Erzeugung von Bewegungssollwerten für die Werkzeugmaschine 4, ist in einem NC-Kern 12 realisiert.

Schließlich realisiert die dritte Hauptfunktionalität der Werkzeugmaschinensteuerung 4 eine Anpasssteuerung 14, die der Anpassung der allgemeinen, auf das Werkstück bezogenen Bewegungssteuerung aus dem NC-Kern 12 an die konkrete Werkzeugmaschine 4 dient.

Die daten- oder signaltechnische Verbindung der Werkzeugmaschinensteuerung 2 mit der Werkzeugmaschine 4 erfolgt bezüglich der Bewegungssollwerte für die Achsen 15 der Werkzeugmaschine 4 über erste Steuerleitungen 16 und bezüglich der Aktoren und Sensoren in der Werkzeugmaschine 4 mittels zweiter Steuerleitungen 18 über binäre Ein-/Ausgänge 17.

In der Anpasssteuerung 14 sind maschinenbezogene Verbindungen auf Grundlage boolescher Variablen und Grundfunktionen realisiert. Dazu gehören das Ansteuern von Aktoren, das Erfassen von Sensorsignalen, das Realisieren von Überwachungsfunktionen, das Gewährleisten von Sicherheitsfunktionen usw. Hier sind einfache logische Verknüpfungen bis hin zu Ablaufsteuerungen mit Zeit- und Zählfunktionen realisiert. Dazu werden Steuerbefehle des im NC-Kern 12 ablaufenden Steuerprogramms für die Werkzeugmaschine 4 weiter bearbeitet. Beispielsweise werden T- und M-Befehle aus dem G-Code hier an die konkrete Werkzeugmaschine 4 angepasst und in entsprechende Steuersignale umgesetzt.

In herkömmlichen numerischen Steuerungen ist die Anpasssteuerung 14 mittels einer speicherprogrammierbaren Steuerung realisiert. Gemäß dem hier beschriebenen Ausführungsbeispiel der Erfindung umfasst die vorliegende Anpasssteuerung 14 eine Datenerfassungslogik 20, über die alle Maschinenparameter, die für die verschiedensten Maschinenzustände charakteristisch sind, ausgewertet und für den Programmablauf in dem NC-Kern 12 aufbereitet werden. Diese Zustandssignale werden gegebenenfalls an die Ein-/Ausgabeeinheit 6 und an die Kommunikationsschnittstelle 8 weitergegeben.

Die Datenerfassungslogik 20 umfasst ein Schnittstellenmodul 22 mit Regeln, mittels derer eine Maschinendatenstruktur einer Kombination von Werten der Maschinenparameter in eine von der numerischen Steuerung 2 lesbare Steuerungsdatenstruktur transformiert wird. Dabei ist das Ziel der Transformation, die verschiedenen und für jeden Werkzeugmaschinentyp eigenen Maschinendatenstrukturen unter Beibehaltung der Semantik in standardisierte Steuerungsdatenstrukturen zu transformieren.

Unter dem Begriff Datenstruktur werden hier Datenelemente und/oder weitere Datenstrukturen verstanden, die in einem logischen Zusammenhang stehen, und die zu einer größeren Einheit unter einem gemeinsamen Namen zusammengefasst sind. Eine Datenstruktur beschreibt die Art der Organisation der Daten bei einer Datenübertragung und bei einer Verarbeitung in einem Rechner.

Das Schnittstellenmodul 22 umfasst einen Interpreter 24. Der Interpreter 24 transformiert die Maschinendatenstruktur mittels der implementierten Regeln in die Steuerungsdatenstruktur. Die Regeln für die Transformationen sind in ein für jede Werkzeugmaschine charakteristisches Plugin 26, 26.1, 26.2, 26.3 abgelegt. Damit ergibt sich der Vorteil, dass die Anpasssteuerung 14 lediglich durch Aufnahme des für die Werkzeugmaschine 4 charakteristischen Plugins 26 an den konkreten Werkzeugmaschinetyp angepasst werden kann. Bei einem anderen Werkzeugmaschinentyp wird die Werkzeugmaschinensteuerung 2 beispielsweise durch das entsprechende Plugin 26.1 bzw. 26.2 bzw. 26.3 usw. an die konkrete Werkzeugmaschine angepasst. Die Plugins 26.1, 26.2, 26.3 usw. können beispielsweise in einer Bibliothek abgelegt sein.

FIG 2 zeigt in einem Blockbild ein Verfahren zur Erzeugung von Regeln zur Transformation von Werkzeugmaschinendaten in Steuerungsdaten. Dazu wird in einem ersten Verfahrensschritt 30 die Werkzeugmaschine 4 beispielsweise über die Ein-/Ausgabeeinheit 6 in einen ersten Betriebszustand versetzt, wozu eine erste Regel zur Transformation erstellt werden soll. Die Ansteuerung der Maschine kann auch über einen Fernzugriff in Form einer App erfolgen. Unter App soll eine Anwendungssoftware (auch Anwendungsprogramm, kurz Anwendung oder Applikation; englisch application software, kurz App) für Mobilgeräte wie Smartphones und Tabletcomputer verstanden werden, womit allgemein eine nützliche oder gewünschte benutzernahe Funktionalität bereitgestellt und unterstützt wird. Diese benutzernahe Funktionalität besteht hier in der Steuerung der Maschine.

Die sich aus dem ersten Betriebszustand ergebenden Werte der Maschinenparameter werden in einem zweiten Verfahrensschritt 32 über die zweiten Steuerleitungen 18 an den Interpreter 24 in der Datenerfassungslogik 20 übertragen und dort gespeichert. Der Interpreter 24 erhält ebenfalls zu dem vorgegebenen ersten Betriebszustand ein erstes von der Werkzeugmaschinensteuerung 2 lesbares Steuerdatum, dem das Maschinendatum, das auftritt und den Maschinenzustand beschreibt, zugeordnet werden soll.

Nach Freigabe des Bedieners wird die von der numerischen Steuerung lesbare Steuerdatenstruktur des vorgegebenen Betriebszustands mit den Werten der sich dabei in der Werkzeugmaschine 4 einstellenden Werte der Betriebsparameter in einem dritten Verfahrensschritt 34 zu einer ersten Regel verknüpft.

Die erste Regel ist somit vom Interpreter 24 gelernt worden, indem einem aktuellen Ist-Datensatz ein bestimmter Maschinenzustand zugewiesen worden ist.

Daraufhin wird die Werkzeugmaschine 4 im Verfahrensschritt 36 in einen zweiten Zustand versetzt, bei dem sich entsprechend eine andere Kombination der Werte der Betriebsparameter einstellt. Analog zu den Verfahrensschritten 32 und 34 wird zu dem zweiten Zustand eine zweite Regel erstellt.

Die vorstehend angegebenen Verfahrensschritte werden so oft durchlaufen, bis zu allen allgemein auftretenden Betriebszuständen die zur Datentransformation erforderlichen Regeln erstellt sind. Diese für den entsprechenden Werkzeugmaschinentyp gültigen Regeln sind in dem Plugin 26 abgelegt.

Die wie vorstehend erstellten Regeln können auch für gleiche Werkzeugmaschinen 4 direkt zur Anpassung der numerischen Steuerung 4 wieder verwendet werden. So ist es möglich eine komplette Bibliothek von Plugins 26, 26.1, 26.2, 26.3 usw. wie vorstehend beschrieben zu erstellen. Zur Anpassung an eine konkrete Werkzeugmaschine muss dann lediglich eines dieser Plugins 26, 26.1, 26.2, 26.3 in den Interpreter 24 geladen werden.

Falls für eine konkrete Werkzeugmaschine die Plugin-Bibliothek noch kein charakteristisches Plugin 26, 26.1, 26.2, 26.3 enthalten sollte, kann ein Inbetriebnehmer der Werkzeugmaschine mit dem anhand von FIG 2 beschriebenen Verfahren die anhand von FIG 1 beschriebene Werkzeugmaschinensteuerung 2 ohne Kenntnis der konkreten Werte der Werkzeugmaschinenparameter zumindest für allgemein gültige Zustände der Werkzeugmaschine 4 an die Werkzeugmaschinensteuerung 2 anpassen. Das geschieht in einfacher Weise dadurch, dass aus den auftretenden Ist-Werten der Werkzeugmaschinenparameter entsprechende Regeln erstellt werden.

## Patentansprüche

1. Vorrichtung zur datenmäßigen Anpassung einer numerischen Steuerung (2) an eine Maschine (4), umfassend eine Datenerfassungslogik (20), die über eine Datenverbindung (18) mit der Maschine (4) verbunden ist, zur Erfassung von Werten von Maschinenparametern, die für einen Maschinenzustand charakteristisch sind, wobei die Datenerfassungslogik (20) ein Schnittstellenmodul (22) umfasst,
**dadurch gekennzeichnet,**
- **dass** das Schnittstellenmodul (22) Regeln enthält, mittels derer eine Maschinendatenstruktur der Werte von Maschinenparametern in eine von der numerischen Steuerung (2) lesbare Steuerungsdatenstruktur transformiert wird,
- und **dass** das Schnittstellenmodul (22) einen Interpreter (24) mit Plugin-Mechanismen (26, 26.1, 26.2, 26.3) für die Regeln zur Interpretation und Aufbereitung der Daten von Maschinenparametern umfasst.

2. Vorrichtung nach Anspruch 1 zur datenmäßigen Anpassung der numerischen Steuerung (2) an eine Werkzeugmaschine.

3. Vorrichtung nach Anspruch 1 oder 2,
**dadurch gekennzeichnet, dass** die zu steuernde Maschine (4) Aktoren und Sensoren umfasst, wobei die Maschinenparameter von den Zuständen der Aktoren und Sensoren bestimmt werden.

4. Numerische Steuerung mit einer Vorrichtung nach einem der Ansprüche 1 bis 3,
**dadurch gekennzeichnet, dass** die numerische Steuerung (2) eine Anpasssteuerung (14) umfasst und dass die Datenerfassungslogik (20) als Teil der Anpasssteuerung (14) der numerischen Steuerung (2) ausgebildet ist.

5. Verfahren zur datenmäßigen Anpassung einer numerischen Steuerung (2) an eine Maschine(4), wobei die numerische Steuerung (2) eine Datenerfassungslogik (20) umfasst, die über eine Datenverbindung (18) mit der Maschine (4) verbunden ist zur Erfassung von Werten von Maschinenparametern, die für einen Maschinenzustand charakteristisch sind,
**dadurch gekennzeichnet, dass** das Verfahren die folgenden Schritte umfasst:
- Versetzen der zu steuernden Maschine in einen jeweiligen Maschinenzustand (30),
- Übertragen der bei dem jeweiligen Maschinenzustand auftretenden Werte der Maschinenparameter an die Datenerfassungslogik (32),
- Speichern der bei dem jeweiligen Maschinenzustand auftretenden Werte der Maschinenparameter in der Datenerfassungslogik (32) und
- Zuweisen des jeweiligen Maschinenzustands zu den jeweils gespeicherten Werten der Maschinenparameter als mindestens eine Regel zur Interpretation der Werte der Maschinenparameter (34).

6. Verfahren nach Anspruch 5,
**dadurch gekennzeichnet, dass** die Datenerfassungslogik (20) einen Interpreter (24) umfasst mit Regeln zur Interpretation und Aufbereitung der Werte der Maschinenparameter und dass in Abhängigkeit der Werte der Maschinenparameter der Interpreter (24) mittels der Regeln den Maschinenzustand bestimmt.

7. Verfahren nach Anspruch 5 oder 6,
**dadurch gekennzeichnet, dass** die Anpassung der numerischen Steuerung (2) an die zu steuernde Maschine (4) im Rahmen einer Inbetriebnahme der numerischen Steuerung (2) mit der zu steuernden Maschine (4) erfolgt.

## Claims

1. Apparatus for adapting a numerical controller (2) to a machine (4) in terms of data, comprising a data acquisition logic unit (20) which is connected to the machine (4) via a data connection (18) for the purpose of acquiring values of machine parameters which are characteristic of a machine state, wherein the data acquisition logic unit (20) comprises an interface module (22),
**characterised in that**
- the interface module (22) contains rules, by means of which a machine data structure of the values of machine parameters is transformed into a control data structure which can be read by the numerical controller (2),
- and that the interface module (22) comprises an interpreter (24) with plug-in mechanisms (26, 26.1, 26.2, 26.3) for the rules for the purpose of interpreting and preparing data of machine parameters.

2. Apparatus according to claim 1 for adapting the numerical controller (2) to a machine tool in terms of data.

3. Apparatus according to claim 1 or 2, **characterised in that** the machine (4) to be controlled comprises actuators and sensors, wherein the machine parameters are determined by the states of the actuators and sensors.

4. Numerical controller with an apparatus according to one of claims 1 to 3, **characterised in that** the numerical controller (2) comprises an adaptation control (14) and that the data acquisition logic unit (20) is embodied as part of the adaptation control (14) of the numerical controller (2).

5. Method for adapting a numerical controller (2) to a machine (4) in terms of data, wherein the numerical controller (2) comprises a data acquisition logic unit (20), which is connected to the machine (4) via a data connection (18), for the purpose of acquiring values of machine parameters which are characteristic of a machine state,
**characterised in that**
the method comprises the following steps:
- moving the machine to be controlled into a respective machine state (30),
- transmitting the values of the machine parameters occurring in the respective machine state to the data acquisition logic unit (32),
- storing the values of the machine parameters occurring in the respective machine state in the data acquisition logic unit (32) and
- allocating the respective machine state to the respectively stored values of the machine parameters as at least one rule for interpreting the values of the machine parameters (34).

6. Method according to claim 5, **characterised in that** the data acquisition logic unit (20) comprises an interpreter (24) with rules for interpreting and preparing the values of the machine parameters and that as a function of the values of the machine parameters the interpreter (24) determines the machine state by means of the rules.

7. Method according to claim 5 or 6, **characterised in that** the adaptation of the numerical controller (2) to the machine (4) to be controlled is carried out within the scope of commissioning the numerical controller (2) with the machine (4) to be controlled.

## Revendications

1. Dispositif d'adaptation en données d'une commande (2) numérique à une machine (4), comprenant une logique (20) de détection de données, qui est reliée à la machine (4) par une liaison (18) de données pour détecter des valeurs de paramètres de la machine, qui sont caractéristiques d'un état de la machine, la logique (20) de détection de données comprenant un module (22) d'interface,
**caractérisé**
- **en ce que** le module (22) d'interface contient des règles, au moyen desquelles une structure de données de machine des valeurs de paramètres de la machine est transformée en une structure de données de commande déchiffrable par la commande (2) numérique,
- et **en ce que** le module (22) d'interface comprend un interpréteur (24) à mécanisme (26, 26.1, 26.2, 26.3) plugin pour la régulation de l'interprétation et le traitement des données de paramètres de la machine.

2. Dispositif suivant la revendication 1, pour l'adaptation en données de la commande (2) numérique à une machine-outil.

3. Dispositif suivant la revendication 1 ou 2,
**caractérisé en ce que** la machine (4) à commander comprend des actionneurs et des capteurs, les paramètres de la machine étant déterminés par les états des capteurs et des actionneurs.

4. Commande numérique ayant un dispositif suivant l'une des revendications 1 à 3,
**caractérisée en ce que** la commande (2) numérique comprend une commande (14) d'adaptation et **en ce que** la logique (20) de détection de données est constituée sous la forme d'une partie de la commande (14) d'adaptation de la commande (2) numérique.

5. Procédé d'adaptation en données d'une commande (2) numérique à une machine (4), la commande (2) numérique comprenant une logique (20) de détection de données, qui est reliée à la machine (4) par une liaison (18) de données pour la détection de valeurs de paramètres de la machine, qui sont caractéristiques d'un état de la machine,
**caractérisé en ce que** le procédé comprend les stades suivants :
- mise de la machine à commander dans un état (30) respectif de la machine,
- transfert des valeurs, se produisant dans l'état respectif de la machine, des paramètres de la machine à la logique (32) de détection de données,
- mise en mémoire des valeurs, se produisant dans l'état respectif de la machine, des paramètres de la machine en mémoire dans la logique (32) de détection de données et
- affectation de l'état respectif de la machine aux valeurs mises en mémoire, respectivement, des paramètres de la machine, comme au moins une règle d'interprétation des valeurs des paramètres (34) de la machine.

6. Procédé suivant la revendication 5,
**caractérisé en ce que** la logique (20) de détection de données comprend un interpréteur (24) ayant des règles d'interprétation et de traitement des valeurs des paramètres de la machine et **en ce que**, en fonction des valeurs des paramètres de la machine, l'interpréteur (24) détermine l'état de la machine au moyen des règles.

7. Procédé suivant la revendication 5 ou 6,
**caractérisé en ce que** l'adaptation de la commande (2) numérique à la machine (4) à commander s'effectue dans le cadre d'une mise en service de la commande (2) numérique avec la machine (4) à commander.
